# EUROPEAN PATENT APPLICATION

(11) **EP 4 836 153 A1**
(43) Date of publication of application: **04.11.2026**
(21) Application number: 24936652.7
(22) Date of filing: 15.10.2024
(51) Int. Cl.: H01M 50/342

(54) **BATTERY CELL, BATTERY, AND ELECTRIC DEVICE**

(30) Priority: 22.04.2024 CN 202420831009 U
(71) Applicant: Contemporary Amperex Technology Co., Limited, Ningde, Fujian 352100 (CN)
(72) Inventor: WU, Kai, Ningde, Fujian 352100 (CN); LIU, Shuangxu, Ningde, Fujian 352100 (CN); JIN, Qiu, Ningde, Fujian 352100 (CN)
(74) Representative: Lorenz Seidler Gossel Part. mbB
(86) International application number: PCT/CN2024/125065
(87) International publication number: WO 2025/222760

(57) **Abstract**

A battery cell (30), a battery (10), and an electric device. The battery cell (30) comprises a casing (31) and a pressure relief mechanism (40); the casing (31) comprises an accommodating cavity (30a) and a first wall (313); the pressure relief mechanism (40) is arranged on the first wall (313) and comprises a body portion (41) and an insulating portion (42), the material of the body portion (41) comprises a metal material, the insulating portion (42) is arranged on the side of the body portion facing away from the accommodating cavity (30a), and the melting point T1 of the insulating portion (42) satisfies: T1 ≥ 400 °C. In the event of thermal runaway of the battery cell (30), the insulating portion (42) flips over, and the pressure relief mechanism (40) overlaps a conductive supporting member (50) inside the battery (10) by means of the insulating portion (42), reducing the risk of short circuit inside the battery (10), and thus improving the reliability of the battery (10).

## Description

### CROSS-REFERENCE TO RELATED APPLICATION

The present application claims priority to Chinese Patent Application No. CN202420831009.6 filed on April 22, 2024 and entitled "BATTERY CELL, BATTERY, AND ELECTRIC DEVICE", the content of which is incorporated herein by reference in its entirety.

### TECHNICAL FIELD

The present application relates to the technical field of batteries, and in particular, to a battery cell, a battery, and an electric device.

### BACKGROUND

Batteries are widely applied in electronic devices, such as mobile phones, laptop computers, electric bicycles, electric vehicles, electric airplanes, electric ships, electric toy cars, electric toy ships, electric toy airplanes, and electric tools.

In the development of the battery technology, in addition to improving the service performance of batteries, the reliability of batteries is also an important consideration. Therefore, how to improve the reliability of batteries remains a problem to be continuously addressed in the battery technology.

### SUMMARY

The present application provides a battery cell, a battery, and an electric device, so as to improve the reliability of the battery.

The present application is implemented through the following technical solutions.

In a first aspect, embodiments of the present application provide a battery cell. The battery cell includes a housing and a pressure relief mechanism. The housing includes an accommodating cavity and a first wall. The pressure relief mechanism is disposed on the first wall. The pressure relief mechanism includes a body part and an insulating part; a material of the body part includes a metal material, the insulating part is disposed on a side, facing away from the accommodating cavity, of the body part, and a melting point T1 of the insulating part satisfies: T1 ≥ 400 °C.

In the battery cell according to the embodiments of the present application, the pressure relief mechanism includes the body part and the insulating part, the insulating part is disposed on the side, facing away from the accommodating cavity, of the body part, and the melting point T1 of the insulating part satisfies: T1 ≥ 400 °C. Thus, when thermal runaway occurs in the battery cell, the pressure relief mechanism is opened, the insulating part does not melt and flips together with the body part, and the pressure relief mechanism overlaps an electrically conductive support member inside the battery via the insulating part, which helps to reduce the risk of internal short circuits of the battery, thereby improving the reliability of the battery.

According to some embodiments of the present application, the insulating part covers the body part.

In the above solution, when the pressure relief mechanism is flipped, it is further beneficial for reducing the risk of internal short circuits of the battery caused by the contact between the body part and the guiding member, thereby helping to further improve the reliability of the battery.

According to some embodiments of the present application, the insulating part is provided with a through hole, and the insulating part is disposed around a peripheral side of the through hole.

In the above solution, when the pressure relief mechanism is flipped, the insulating part comes into contact with the support member, which helps to reduce the weight and material usage of the insulating part while reducing the risk of internal short circuits of the battery, thereby helping to reduce the weight and the production cost of the battery cell.

According to some embodiments of the present application, the insulating part covers an outer edge of the body part.

In the above solution, by arranging the insulating part to cover the outer edge of the body part, during pressure relief of the pressure relief mechanism, after the pressure relief mechanism flips outward, the insulating part preferentially comes into contact with the electrically conductive support member. This helps to further improve the insulating effect of the insulating part between the body part and the electrically conductive support member outside the battery cell while reducing the weight and material usage of the insulating part, thereby further reducing the risk of internal short circuits of the battery.

According to some embodiments of the present application, the body part is in a sheet shape, and/or the insulating part is in a sheet shape.

In the above solution, the body part and/or the insulating part occupy a small space, thereby facilitating processing and manufacturing. In addition, the thickness of the body part or the insulating part can be appropriately set based on the pressure relief threshold of the pressure relief mechanism, so as to improve the promptness and accuracy of opening of the pressure relief mechanism.

According to some embodiments of the present application, a material of the insulating part is one of polyimide, ceramic, and mica.

In the above solution, the polyimide, ceramic, and mica can all meet the melting point requirement of the insulating part, and they feature a relatively low price and are readily available. Thus, when thermal runaway occurs in the battery cell, the insulating part can meet the insulation requirements of the body part and the electrically conductive support member. In addition, reduction in the production cost of the battery cell is facilitated.

According to some embodiments of the present application, the pressure relief mechanism further includes a reinforcing part, and the reinforcing part is disposed between the body part and the insulating part.

In the above solution, the reinforcing part can improve the overall structural strength of the pressure relief mechanism, and reduce the risk of the pressure relief mechanism being unintentionally opened due to vibration, impact, or other loads during normal operation of the battery cell, thereby helping to improve the reliability of the battery cell.

According to some embodiments of the present application, the reinforcing part includes a coating, the coating is formed on a surface of a side, facing the insulating part, of the body part, and a melting point T2 of the coating satisfies: T2 < 400 °C.

In the above solution, by arranging the reinforcing part to include the coating, the processing and manufacturing of the reinforcing part is facilitated. In addition, by setting the melting point T2 of the coating to be < 400 °C, the coating can be promptly melted when thermal runaway occurs in the battery cell, thereby enabling prompt opening of the pressure relief mechanism.

According to some embodiments of the present application, the pressure relief mechanism further includes an insulating thermally expandable part; the insulating thermally expandable part is disposed as a layer between the insulating part and the body part, and the insulating thermally expandable part is configured to be capable of expanding and deforming when heated.

In the above solution, providing the insulating thermally expandable part between the body part and the insulating part is beneficial for reducing the volume occupied by the pressure relief mechanism and improving the energy density of the battery cell. In addition, it is also beneficial for increasing the creepage distance between the body part and the electrically conductive support member of the battery when thermal runaway occurs in the battery cell, thereby helping to further improve the reliability of the battery.

According to some embodiments of the present application, a material of the insulating thermally expandable part is thermally expandable graphite.

In the above solution, the thermally expandable graphite features a low price, good insulating properties, and relatively good high-temperature resistance, and the thermally expandable graphite has a relatively high coefficient of thermal expansion. When thermal runaway occurs in the battery cell, the pressure relief mechanism is opened, and the insulating thermally expandable part has a relatively large thickness after expansion, which helps to further improve the insulation distance and the insulating performance between the body part and the electrically conductive support member, thereby improving the reliability of the battery.

In a second aspect, the embodiments of the present application provide a battery. The battery includes a support member and the battery cell according to any one of the above embodiments. The support member is disposed on one side of a first wall of the battery cell. A material of the support member includes a metal material, the support member is provided with a through opening, and the through opening is disposed opposite to the pressure relief mechanism.

In the battery according to the embodiments of the present application, the pressure relief mechanism of the battery cell in the battery includes the body part and the insulating part, the insulating part is disposed on the side, facing away from the accommodating cavity, of the body part, and the melting point T1 of the insulating part is set to be ≥ 400 °C. Thus, when thermal runaway occurs in the battery cell, the pressure relief mechanism is opened, the insulating part does not melt and flips together with the body part, and the pressure relief mechanism overlaps the support member via the insulating part, which helps to reduce the risk of internal short circuits of the battery, thereby improving the reliability of the battery.

According to some embodiments of the present application, the insulating part is in a sheet shape, and a ratio of a thickness e of the insulating part to a maximum voltage U of the battery is greater than or equal to 0.0005 and less than or equal to 0.02, where e is expressed in millimeters, and U is expressed in volts.

In the above solution, by setting the ratio of the thickness e of the insulating part to the maximum voltage U of the battery to be greater than or equal to 0.0005 and less than or equal to 0.02, when thermal runaway occurs in the battery cell, it is beneficial for reducing the risk of insulation failure caused by breakdown of the insulating part, thereby helping to improve the insulating properties of the insulating part, and is beneficial for reducing the volume inside the battery cell occupied by the insulating part, thereby helping to improve the energy density of the battery cell.

According to some embodiments of the present application, the insulating part is in a sheet shape, and a ratio of a thickness e of the insulating part to a product of a creepage distance c of the battery and a breakdown electric field E of the insulating part is greater than or equal to 0.00015, where e and c are expressed in millimeters, and E is expressed in kilovolts/meter.

In the above solution, when thermal runaway occurs in the battery cell, it is beneficial for reducing the risk of insulation failure of the insulating part caused by breakdown of the insulating part.

According to some embodiments of the present application, the insulating part is provided with a through hole, and the insulating part is disposed around a peripheral side of the through hole; an orthographic projection of the insulating part on the first wall is a first projection, the first projection is in an annular shape, the first projection is provided with a first edge and a second edge, the second edge is located inside the first edge, and a ratio of a minimum distance d between the first edge and the second edge to a maximum voltage U of the battery is greater than or equal to 0.0005, where d is expressed in millimeters, and U is expressed in volts.

In the above solution, setting the ratio of the minimum distance d between the first edge and the second edge to the maximum voltage U of the battery to be greater than or equal to 0.0005 is beneficial for reducing the weight of the insulating part and reducing the risk of insulation failure caused by breakdown of the insulating part when thermal runaway occurs in the battery cell.

In a third aspect, the electric device according to the embodiments of the present application includes the battery or the battery cell according to any one of the above embodiments. The battery is configured to provide electric energy.

The electric device according to the embodiments of the present application uses the battery or the battery cell according to the embodiments of the present application, and therefore has the same technical effects, which will not be repeated here.

The additional aspects and the advantages of the present application will be partially provided in the following description, will partially become apparent from the following description, or will be learned through the practice of the present application.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to an embodiment of the present application;
FIG. 2 is a schematic structural diagram of a battery according to an embodiment of the present application;
FIG. 3 is a schematic structural diagram of a battery module in a battery according to an embodiment of the present application;
FIG. 4 is a schematic exploded view of a structure of a battery cell according to an embodiment of the present application;
FIG. 5 is a schematic cross-sectional view of a structure of a battery according to an embodiment of the present application;
FIG. 6 is an exploded view of a pressure relief mechanism of a battery cell according to an embodiment of the present application;
FIG. 7 is an exploded view of a pressure relief mechanism of another battery cell according to an embodiment of the present application;
FIG. 8 is an exploded view of a pressure relief mechanism of yet another battery cell according to an embodiment of the present application;
FIG. 9 is an exploded view of a pressure relief mechanism of still another battery cell according to an embodiment of the present application;
FIG. 10 is a front view of a pressure relief mechanism in a battery cell according to an embodiment of the present application; and
FIG. 11 is a schematic structural diagram of a first projection of an insulating part of a pressure relief mechanism in a battery cell according to an embodiment of the present application.

The drawings are not necessarily drawn to scale.

### Description of the reference numerals:

1-vehicle; 1a-motor; 1b-controller;
10-battery; 11-case; 11a-venting passage; 111-first sub-case; 112-second sub-case;
20-battery module;
30-battery cell; 31-housing; 30a-accommodating cavity; 311-housing body; 312-end cover; 313-first wall; 32-electrode assembly;
40-pressure relief mechanism; 41-body part; 42-insulating part; 42a-through hole; 43-reinforcing part; 431-first projection; 431a-first edge; 431b-second edge; 44-insulating thermally expandable part;
50-support member; 50a-through opening.

### DETAILED DESCRIPTION

To make the objectives, technical solutions, and advantages of embodiments of the present application clearer, the technical solutions in the embodiments of the present application will be clearly and comprehensively described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references to the word at various locations in the specification do not necessarily refer to the same embodiment, nor to separate or alternative embodiments that are mutually exclusive of other embodiments. It will be explicitly and implicitly understood by those skilled in the art that the described embodiments of the present application can be combined with other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

The term "plurality of" used in the present application refers to two or more (including two). Similarly, "plurality of groups" refers to two or more (including two) groups, and "plurality of pieces" refers to two or more (including two) pieces.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the floor of the vehicle, or a portion of the case may become at least a portion of a crossbeam and a longitudinal beam of the vehicle.

In some embodiments, the battery may be an energy storage device. The energy storage device includes an energy storage container, an energy storage electrical cabinet, and the like.

In the embodiments of the present application, the battery cell may be a secondary battery. The secondary battery refers to a battery cell that can be reused by activating the active material through charging after the battery cell is discharged.

The battery cell may, but is not limited to, be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like.

The battery cell generally includes an electrode assembly. The electrode assembly includes a positive electrode, a negative electrode, and a separator. During the charging and discharging of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used.

In some embodiments, the negative electrode may be a negative electrode plate, and the negative electrode plate may include a negative electrode current collector.

As an example, a metal foil or a composite current collector may be used as the negative electrode current collector. For example, for the metal foil, aluminum treated with silver on the surface, stainless steel treated with silver on the surface, stainless steel, copper, aluminum, nickel, carbon electrode, carbon, nickel, titanium, or the like may be used.

In some embodiments, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the separator is a separation film. The present application does not particularly limit the type of separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, which is not specified. When the separation film is a multi-layer composite film, the materials of layers may be the same or different, which is not specified. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the electrode assembly is of a wound structure. The positive electrode plate and the negative electrode plate are wound to form a wound structure.

In some embodiments, the electrode assembly is of a stacked structure.

In some embodiments, the battery cell may include a housing. The housing is configured to encapsulate components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

In some embodiments, the housing includes an end cover and a housing body. The housing body is provided with an opening, and the end cover closes the opening to form a sealed space for accommodating the electrode assembly, the electrolyte, and other substances. The housing body may be provided with one or more openings. There may also be one or more end covers.

In some embodiments, at least one electrode terminal is disposed on the housing, and the electrode terminal is electrically connected to tabs of the electrode assembly. The electrode terminal may be directly connected to the tabs or may be indirectly connected to the tabs via an adapter member. The electrode terminal may be disposed on the end cover, or may also be disposed on the housing body.

In some embodiments, an anti-explosion valve is disposed on the housing. The anti-explosion valve is configured to relieve the internal pressure of the battery cell.

As an example, the battery cell may be a cylindrical battery cell, a prismatic battery cell, a pouch battery cell, or a battery cell of other shapes. The prismatic battery cell includes a square-housing battery cell, a blade-shaped battery cell, and a polygonal prismatic battery, and the polygonal prismatic battery is, for example, a hexagonal prismatic battery. This is not particularly limited in the embodiments of the present application.

The pressure relief mechanism is an important component of the battery cell. When the pressure inside the battery cell reaches a preset threshold, the pressure relief mechanism is opened, and the gas inside the battery cell is discharged, which is conducive to reducing the risk of explosion of the battery cell caused by the further increase in the air pressure inside the battery cell.

However, in the related art, after the battery cells are assembled into the battery cell, the pressure relief mechanism of the battery cell is typically adjacent to a support member. The support member may be configured to support the battery cell, and the material of the support member typically includes a metal material and has certain electrical conductivity. During the pressure relief of the battery cell, the pressure relief mechanism flips outward to open, such that after the pressure relief mechanism is opened, there is a high risk that the pressure relief mechanism comes into contact with and is electrically connected to the electrically conductive support member inside the battery. Thus, during the pressure relief of the battery cell, the battery has a high risk of internal short circuits, which would severely affect the reliability of the battery.

In view of this, the battery cell according to the embodiments of the present application includes a housing and a pressure relief mechanism. The housing includes an accommodating cavity and a first wall. The pressure relief mechanism is disposed on the first wall, and the pressure relief mechanism includes a body part and an insulating part. The material of the body part includes a metal material, the insulating part is disposed on a side, facing away from the accommodating cavity, of the body part, and the melting point T of the insulating part satisfies: T ≥ °C.

In the battery cell according to the embodiments of the present application, the pressure relief mechanism is provided with the insulating part; the insulating part is disposed on the side, facing away from the accommodating cavity, of the body part, and the melting point T of the insulating part satisfies: T ≥ °C. When thermal runaway occurs in the battery cell, the pressure relief mechanism flips outward. Since the melting point of the insulating part is higher than the temperature of the battery cell during pressure relief, the insulating part remains intact and is in contact with the support member having a conductive function inside the battery, such that the body part is insulated from the support member, thereby reducing the risk of internal short circuits of the battery and helping to improve the reliability of the battery.

The technical solutions according to the embodiments of the present application are suitable for battery cells, batteries containing battery cells, and electric devices using batteries.

The battery disclosed in the embodiments of the present application may be, but is not limited to being, used in electric devices such as vehicles, ships, or aircraft. The power system of the electric device may be composed of the battery disclosed in the present application.

The embodiments of the present application provide an electric device using a battery as a power source. The electric device may be, but is not limited to, a mobile phone, a tablet, a laptop computer, an electric toy, an electric tool, an electric bicycle, an electric motorcycle, an electric vehicle, a ship, a spacecraft, or the like. The electric toy may include stationary or mobile electric toys, such as game consoles, electric car toys, electric ship toys, electric airplane toys, and the like. The spacecraft may include airplanes, rockets, space shuttles, spaceships, and the like.

For ease of description, the following embodiments are illustrated by taking a vehicle as an example of the electric device according to an embodiment of the present application.

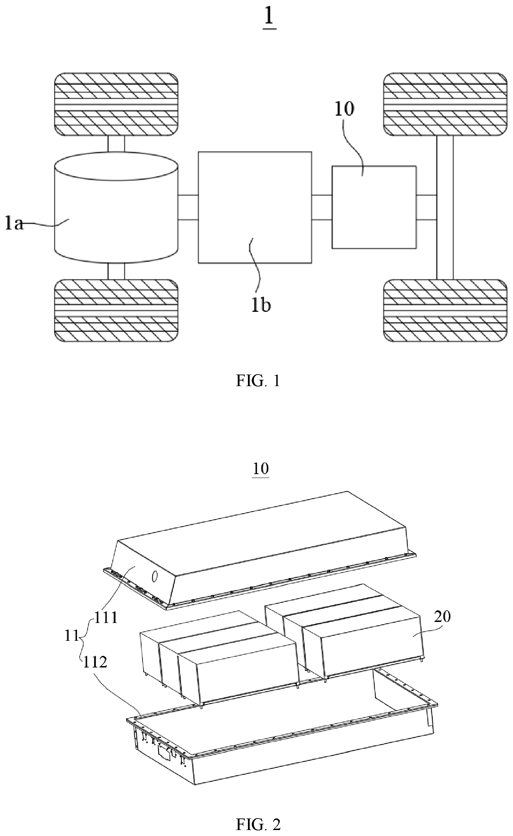

Referring to FIG. 1, FIG. 1 is a schematic structural diagram of a vehicle according to some embodiments of the present application. The vehicle 1 may be a fuel vehicle, a gas vehicle, or a new energy vehicle. The new energy vehicle may be a pure electric vehicle, a hybrid vehicle, an extended-range vehicle, or the like. A battery 10 is disposed inside the vehicle 1, and the battery 10 may be disposed at the bottom, head, or tail of the vehicle 1. The battery 10 may be used to supply power to the vehicle 1. For example, the battery 10 may serve as an operation power source for the vehicle 1 and is used in the circuit system of the vehicle 1, for example, for operation power needed for starting, navigation, and driving of the vehicle 1.

The vehicle 1 may further include a controller 1b and a motor 1a. The controller 1b is configured to control the battery 10 to supply power to the motor 1a, e.g., for operation power needed for starting, navigation, and driving of the vehicle 1.

In some embodiments of the present application, the battery 10 may not only serve as the operation power source for the vehicle 1, but also as a driving power source for the vehicle 1 to, replacing or partially replacing fuel or natural gas, provide driving power for the vehicle 1.

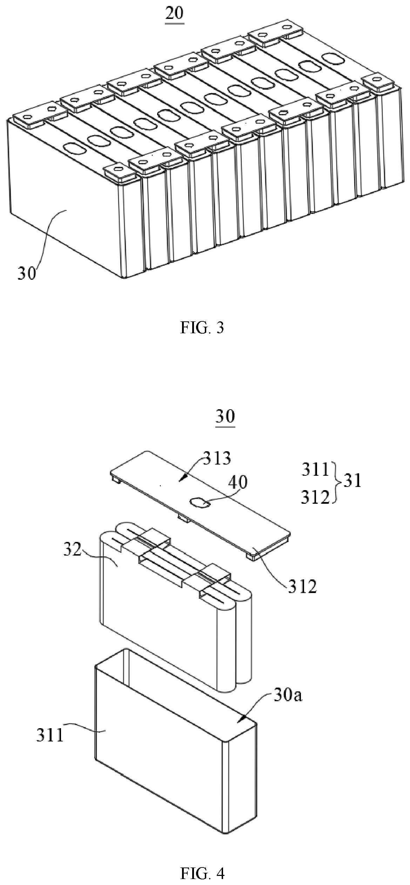

Referring to FIGs. 2 and 3, FIG. 2 is a schematic structural diagram of a battery 10 according to an embodiment of the present application, and FIG. 3 is a schematic structural diagram of a battery module 20 in a battery 10 according to an embodiment of the present application. The battery 10 includes a case 11 and battery cells 30. The battery cells 30 are accommodated in the case 11. The case 11 is configured to provide an accommodating space for the battery cells 30, and the case 11 may be of various structures. In some embodiments, the case 11 may include a first sub-case 111 and a second sub-case 112. The first sub-case 111 and the second sub-case 112 cover each other. The first sub-case 111 and the second sub-case 112 jointly define the accommodating space for accommodating the battery cell 30. The second sub-case 112 may be of a hollow structure with one end open, and the first sub-case 111 may be of a plate-shaped structure. The first sub-case 111 covers the open side of the second sub-case 112, such that the first sub-case 111 and the second sub-case 112 jointly define the accommodating space. The first sub-case 111 and the second sub-case 112 may also be of a hollow structure with one side open, and the open side of the second sub-case 112 is covered by the open side of the first sub-case 111.

In the battery 10, a plurality of battery cells 30 may be provided, and the plurality of battery cells 30 may be connected in series, in parallel, or in series-parallel. The series-parallel connection means that both series connection and parallel connection are present for the connection among the plurality of battery cells 30. The plurality of battery cells 30 may be directly connected in series, in parallel, or in series-parallel, and then the whole formed by the plurality of battery cells 30 is accommodated in the case 11. Certainly, the situation may be that in the battery 10, the plurality of battery cells 30 are first connected in series, in parallel, or in series-parallel to form battery modules 20, and then the plurality of battery modules 20 are connected in series, in parallel, or in series-parallel to form a whole, the whole being accommodated in the case 11. The battery 10 may further include other structures. For example, the battery 10 may further include a busbar component for achieving an electrical connection among the plurality of battery cells 30.

The battery cell 30 may be a secondary battery or a primary battery; the battery cell 30 may also be a lithium-sulfur battery, a sodium-ion battery, or a magnesium-ion battery, but is not limited thereto.

Referring to FIG. 4, FIG. 4 is an exploded view of a battery cell 30 according to some embodiments of the present application. As shown in FIG. 3, the battery cell 30 includes a housing 31, an electrode assembly 32, and an electrode terminal. The housing 31 includes a housing body 311 and an end cover 312. The housing body 311 is provided with an opening, and the end cover 312 closes the opening to isolate the internal environment of the battery cell 30 from the external environment.

The housing body 311 is an assembly configured to form the internal environment of the battery cell 30 in combination with the end cover 312. The formed internal environment may be used to accommodate the electrode assembly 32, the electrolytic solution, and other components. The housing body 311 and the end cover 312 may be separate components. The housing body 311 may be of various shapes and dimensions. Specifically, the shape of the housing body 311 may be determined based on the specific shape and dimension of the electrode assembly 32. The housing body 311 may be made of various materials, such as copper, iron, aluminum, stainless steel, aluminum alloy, and plastic.

The end cover 312 refers to a component that covers the opening of the housing body 311 to isolate the internal environment of the battery cell 30 from the external environment. Without limitation, the shape of the end cover 312 may be adapted to the shape of the housing 311 to mate with the housing 311. Optionally, the end cover 312 may be made of a material with a certain hardness and strength (for example, an aluminum alloy), such that the end cover 312 is not easily deformed when compressed or collided. This enables the battery cell 30 to have higher structural strength, and the reliability can also be improved. Functional components, such as electrode terminals, may be provided on the end cover 312. The electrode terminal may be configured to be electrically connected to the electrode assembly 32 to output or input the electric energy of the battery cell 30. The end cover 312 may also be made of various materials, such as copper, iron, aluminum, stainless steel, an aluminum alloy, and plastic, which is not specifically limited in the embodiments of the present application. In some embodiments, an insulating structure may also be provided on the inner side of the end cover 312, and the insulating structure may be configured to isolate an electrical connection component in the housing body 311 from the end cover 312 to reduce the risk of short circuits. Illustratively, the insulating structure may be made of plastic, rubber, or the like.

The electrode assembly 32 is a component where the electrochemical reaction occurs in the battery cell 30. One or more electrode assemblies 32 may be accommodated in the housing body 311. The electrode assembly 32 is mainly formed by winding or stacking a positive electrode plate and a negative electrode plate, and a separation film is typically provided between the positive electrode plate and the negative electrode plate. The separation film is configured to isolate the positive electrode plate from the negative electrode plate, thereby preventing short circuits caused by internal contact between the positive electrode plate and the negative electrode plate. The parts of the positive electrode plate and the negative electrode plate that contain active substances constitute the electrode body of the electrode assembly 32, and the parts of the positive electrode plate and the negative electrode plate that do not contain active substances each constitute a tab. The positive electrode tab and the negative electrode tab may be located together at one end of the electrode body or respectively at two ends of the electrode body. During the charging and discharging of the battery cell 30, the positive electrode active substance and the negative electrode active substance react with the electrolytic solution, and the tabs are connected to the electrode terminals to form a current circuit.

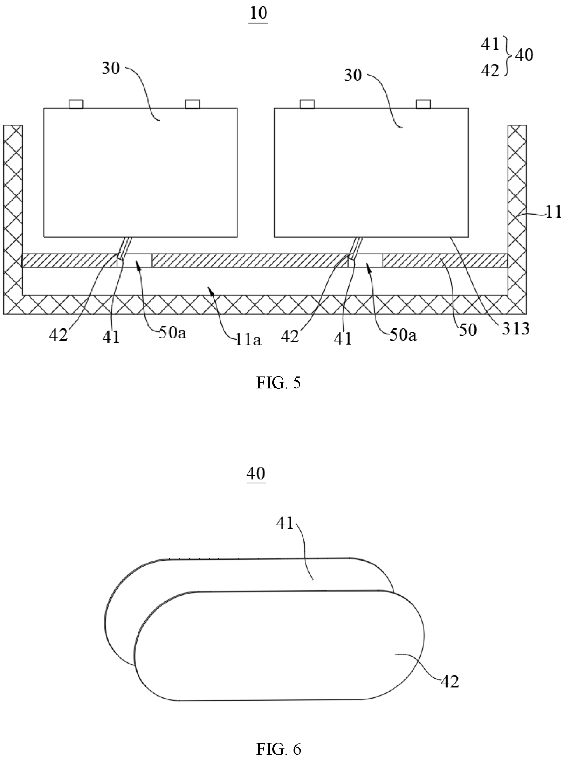

In a first aspect, as shown in FIGs. 4 and 5, the battery cell 30 according to the embodiments of the present application includes a housing 31 and a pressure relief mechanism 40. The housing 31 includes an accommodating cavity 30a and a first wall 313. The pressure relief mechanism 40 is disposed on the first wall 313, and the pressure relief mechanism 40 includes a body part 41 and an insulating part 42. The material of the body part 41 includes a metal material, the insulating part 42 is disposed on a side, facing away from the accommodating cavity 30a, of the body part 41, and the melting point T1 of the insulating part 42 satisfies: T1 ≥ 400 °C.

The housing 31 includes an accommodating cavity 30a and a first wall 313. The accommodating cavity 30a may be sealed to accommodate the electrolytic solution of the battery cell 30. The housing 31 may include a housing body 311 and an end cover 312. The housing body 311 is provided with an opening, and the end cover 312 covers the opening. The first wall 313 may be a portion of the housing body 311, or the first wall 313 may be at least a portion of the end cover 312.

The battery cell 30 may include an electrode terminal. The electrode terminal may be electrically connected to a tab of the electrode assembly 32, and the electrode terminal may be disposed on the first wall 313, or the electrode terminal may be disposed on a wall portion of the housing 31 opposite to the first wall 313. That is, the pressure relief mechanism 40 and the electrode terminal may both be disposed on the first wall 313, or the pressure relief mechanism 40 is disposed opposite to the electrode terminal.

The material of the body part 41 of the pressure relief mechanism 40 includes a metal material, and the body part 41 may be the primary load-bearing structure of the pressure relief mechanism 40, so as to maintain the structural integrity during normal operation of the battery cell 30, thereby maintaining the sealing performance of the accommodating cavity 30a of the battery cell 30. The body part 41 may be a structure that is made of the same material as the housing 31, such as an aluminum alloy or other materials, to facilitate the connection between the body part 41 and the housing 31. Illustratively, the body part 41 may be formed from a material such as aluminum alloy by providing a score or the like therein, such that when the internal pressure of the battery cell 30 reaches a pressure relief threshold of the battery cell 30, the body part 41 can promptly fracture and open, thereby facilitating prompt pressure relief of the battery cell 30.

The insulating part 42 is disposed on the side, facing away from the accommodating cavity 30a, of the body part 41; that is, the insulating part 42 is disposed on a side, facing the outside of the battery cell 30, of the body part 41, such that when the pressure relief mechanism 40 is opened, the insulating part 42 flips toward the outside of the battery cell 30 together with the body part 41, and the insulating part 42 comes into contact with the electrically conductive support member 50 outside the battery cell 30.

The insulating part 42 and the body part 41 may have the same shape or different shapes. Optionally, the body part 41 may be in a sheet shape, a block shape, or the like. Similarly, the insulating part 42 may be in a sheet shape, a block shape, or other irregular shapes.

The insulating part 42 may be integrally formed, or the insulating part 42 includes a layered structure including a plurality of layers made of different materials, where any two adjacent layers are made of different materials.

The insulating part 42 may be attached to a surface of the body part 41 by adhesion, or the insulating part 42 may be formed on the surface of the body part 41 by coating or the like.

The insulating part 42 is disposed on one side of the body part 41. Optionally, the insulating part 42 may cover the entire side, facing away from the accommodating cavity 30a, of the body part 41, or the insulating part 42 may cover a portion of the side, facing away from the accommodating cavity 30a, of the body part 41, which may be selected based on actual needs.

The melting point T1 of the insulating part 42 is greater than or equal to 400 °C. Illustratively, T1 may be 400 °C, 410 °C, 420 °C, 430 °C, 430 °C, 440 °C, 450 °C, or higher. It can be understood that when thermal runaway occurs in the battery cell 30, both the temperature and the pressure inside the battery cell 30 increase. Typically, the maximum temperature during thermal runaway of the battery cell 30 is about 400 °C. Therefore, the melting point T1 of the insulating part 42 is set to be ≥ 400 °C, such that the insulating part 42 does not melt when thermal runaway occurs in the battery cell 30. In this way, when thermal runaway occurs in the battery cell 30, the insulating part 42 flips together with the body part 41, and the insulating part 42 first comes into contact with another electrically conductive support member 50 outside the battery cell 30, thereby reducing the risk of internal short circuits of the battery 10 caused by the contact between the body part 41 and the support member 50.

Therefore, in the battery cell 30 according to the embodiments of the present application, the pressure relief mechanism 40 includes the body part 41 and the insulating part 42; the insulating part 42 is disposed on the side, facing away from the accommodating cavity 30a, of the body part 41, and the melting point T1 of the insulating part 42 satisfies: T1 ≥ 400 °C. Thus, when thermal runaway occurs in the battery cell 30, the pressure relief mechanism 40 is opened, the insulating part 42 does not melt and flips together with the body part 41, and the pressure relief mechanism 40 overlaps the electrically conductive support member 50 inside the battery 10 via the insulating part 42, which helps to reduce the risk of internal short circuits of the battery 10, thereby improving the reliability of the battery 10.

In some embodiments, the insulating part 42 covers the body part 41.

In this way, the insulating part 42 may be in a continuous sheet shape, and the edge of the insulating part 42 may be flush with the edge of the body part 41, or the edge of the insulating part 42 may extend beyond the edge of the body part 41.

By arranging the insulating part 42 to cover the body part 41, when the pressure relief mechanism 40 is flipped, it is beneficial for further reducing the risk of internal short circuits of the battery 10 caused by the contact between the body part 41 and the support member 50, thereby helping to further improve the reliability of the battery 10.

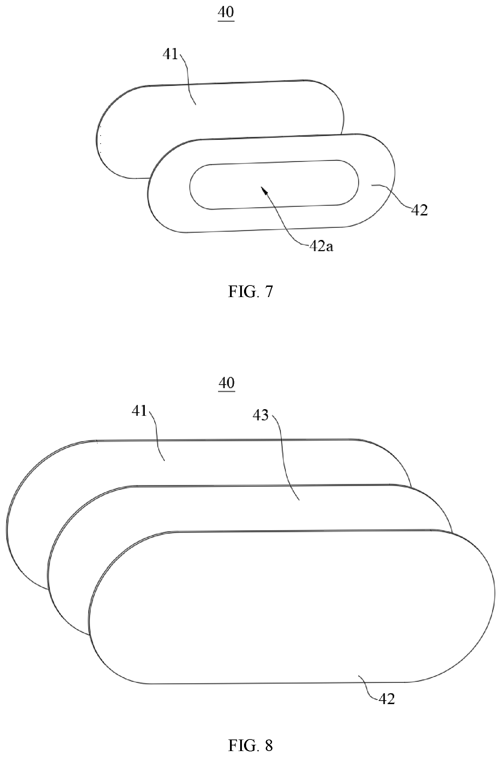

In some embodiments, as shown in FIG. 7, the insulating part 42 is provided with a through hole 42a, and the insulating part 42 is disposed around a peripheral side of the through hole 42a.

In this way, the insulating part 42 may be in an annular shape. When the pressure relief mechanism 40 is flipped, the insulating part 42 comes into contact with the support member 50, which helps to reduce the weight and material usage of the insulating part 42 while reducing the risk of internal short circuits of the battery 10, thereby helping to reduce the weight and production cost of the battery cell 30.

In some embodiments, the insulating part 42 covers an outer edge of the body part 41.

The insulating part 42 covers the outer edge of the body part 41. Optionally, the outer edge of the insulating part 42 may be flush with the outer edge of the body part 41, or the outer edge of the insulating part 42 extends beyond the outer edge of the body part 41 and extends outward.

Since the insulating part 42 is provided with the through hole 42a and the insulating part 42 covers the outer edge of the body part 41, during pressure relief of the pressure relief mechanism 40, after the pressure relief mechanism 40 flips outward, the insulating part 42 preferentially comes into contact with the electrically conductive support member 50 outside the battery cell 30. This helps to further improve the insulating effect of the insulating part 42 between the body part 41 and the electrically conductive support member 50 outside the battery cell 30 while reducing the weight and material usage of the insulating part 42, thereby further reducing the risk of internal short circuits of the battery 10.

In some embodiments, as shown in FIGs. 5 and 6, the body part 41 is in a sheet shape.

In this way, the body part 41 occupies a small space, thereby facilitating processing and manufacturing. In addition, the thickness of the body part 41 can be appropriately set based on the pressure relief threshold of the pressure relief mechanism 40, so as to improve the promptness and accuracy of opening of the pressure relief mechanism 40.

In some embodiments, as shown in FIG. 5, the insulating part 42 is in a sheet shape.

In this way, the insulating part 42 occupies a small space, thereby facilitating processing and manufacturing. In addition, the thickness of the insulating part 42 may be appropriately set based on the requirements for the creepage distance inside the battery 10, so as to reduce the risk of insulation failure of the insulating part 42.

In some embodiments, the material of the insulating part 42 is one of polyimide, ceramic, and mica.

The polyimide, ceramic, and mica can all meet the melting point requirement of the insulating part 42, and they feature a relatively low price and are readily available. Thus, when thermal runaway occurs in the battery cell 30, the insulating part 42 can meet the insulation requirements of the body part 41 and the electrically conductive support member 50. In addition, reduction in the production cost of the battery cell 30 is facilitated.

In some embodiments, as shown in FIG. 8, the pressure relief mechanism 40 further includes a reinforcing part 43. The reinforcing part 43 is disposed between the body part 41 and the insulating part 42.

The reinforcing part 43 may be in a sheet-shaped, layered, or block-shaped form, or other forms. The reinforcing part 43 may be adhesively connected between the body part 41 and the insulating part 42, or the reinforcing part 43 may also be formed on the side, facing away from the accommodating cavity 30a, of the body part 41 by coating.

The arrangement of the reinforcing part 43 can improve the overall structural strength of the pressure relief mechanism 40, and reduce the risk of the pressure relief mechanism 40 being unintentionally opened due to vibration, impact, or other loads during normal operation of the battery cell 30, thereby helping to improve the reliability of the battery cell 30.

In some embodiments, the reinforcing part 43 includes a coating. The coating is formed on a surface of a side, facing the insulating part 42, of the body part 41, and the melting point T2 of the coating satisfies: T2 < 400 °C.

The reinforcing part 43 includes the coating. The specific thickness of the coating can be set based on the specific strength requirements of the pressure relief mechanism 40, and the coating can be formed by a process such as spraying, which facilitates the processing and manufacturing of the reinforcing part 43. The melting point T2 of the coating is set to be < 400 °C, such that the coating can be promptly melted when thermal runaway occurs in the battery cell 30, and the pressure relief mechanism 40 can be promptly opened, thereby helping to enable prompt opening of the pressure relief mechanism 40 when thermal runaway occurs in the battery cell 30 while reducing the unintended opening of the pressure relief mechanism 40 during normal operation of the battery cell 30.

Therefore, by arranging the reinforcing part 43 to include the coating, the processing and manufacturing of the reinforcing part 43 is facilitated. In addition, by setting the melting point T2 of the coating to be < 400 °C, the coating can be promptly melted when thermal runaway occurs in the battery cell 30, thereby enabling prompt opening of the pressure relief mechanism 40.

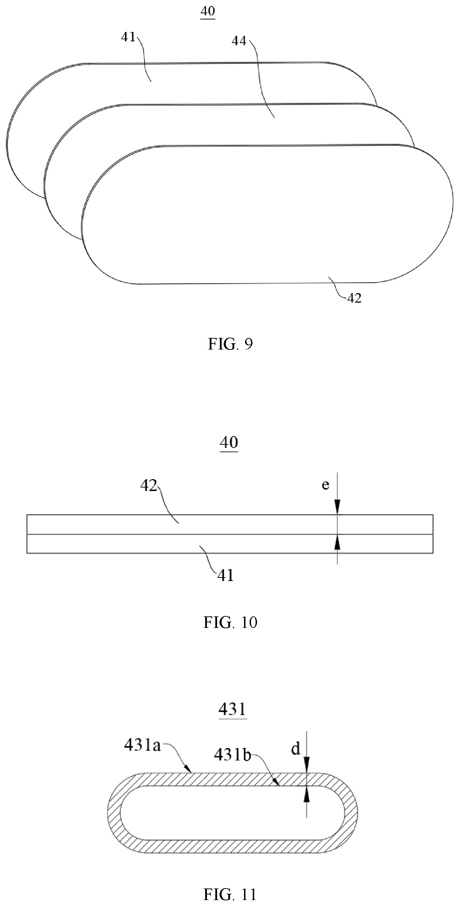

In some embodiments, as shown in FIG. 9, the pressure relief mechanism 40 further includes an insulating thermally expandable part 44. The insulating thermally expandable part 44 is disposed between the insulating part 42 and the body part 41, and the insulating thermally expandable part 44 is configured to be capable of expanding and deforming when heated.

The insulating thermally expandable part 44 has certain insulating properties and a certain coefficient of thermal expansion, such that the insulating thermally expandable part 44 can undergo expansion when heated.

In this way, during normal operation of the battery cell 30, the insulating thermally expandable part 44 is in a compressed state and has a relatively small volume, thereby helping to reduce the volume occupied by the pressure relief mechanism 40 and improve the energy density of the battery cell 30.

In addition, when the battery cell 30 has the risk of thermal runaway, the internal pressure and temperature of the battery cell 30 increase, and the insulating thermally expandable part 44 expands due to the heat. When the internal pressure of the battery cell 30 reaches a pressure threshold of the pressure relief mechanism 40, the insulating thermally expandable part 44 flips together with the body part 41 and the insulating part 42, and the thickness of the insulating thermally expandable part 44 increases after expansion, which is beneficial for increasing the insulation distance between the electrically conductive support member 50 outside the battery cell 30 and the body part 41, i.e., increasing the creepage distance between the support member 50 and the body part 41.

Therefore, providing the insulating thermally expandable part 44 between the body part 41 and the insulating part 42 is beneficial for reducing the volume occupied by the pressure relief mechanism 40 and improving the energy density of the battery cell 30. In addition, it is also beneficial for increasing the creepage distance between the body part 41 and the electrically conductive support member 50 of the battery 10 when thermal runaway occurs in the battery cell 30, thereby helping to further improve the reliability of the battery 10.

In some embodiments, the material of the insulating thermally expandable part 44 is thermally expandable graphite.

The thermally expandable graphite features a low price, good insulating properties, and relatively good high-temperature resistance, and the thermally expandable graphite has a relatively high coefficient of thermal expansion. When thermal runaway occurs in the battery cell 30, the pressure relief mechanism 40 is opened, and the insulating thermally expandable part 44 has a relatively large thickness after expansion and maintains good insulating properties. Moreover, at relatively high temperatures, the structure of the thermally expandable graphite can remain relatively intact. In this way, it helps to further improve the insulation distance and the insulating performance between the body part 41 and the electrically conductive support member 50, thereby improving the reliability of the battery 10.

In a second aspect, as shown in FIG. 5, the battery 10 according to the embodiments of the present application includes a support member 50 and the battery cell 30 according to any one of the above embodiments. The support member 50 is disposed on one side of the first wall 313 of the battery cell 30. The material of the support member 50 includes a metal material. The support member 50 is provided with a through opening 50a, and the through opening 50a is disposed opposite to the pressure relief mechanism 40.

The through opening 50a may extend through the support member 50, and the through opening 50a is disposed opposite to the pressure relief mechanism 40. Optionally, the through opening 50a may be disposed opposite to a portion or all of the pressure relief mechanism 40, such that during the pressure relief of the battery cell 30, gas and the like discharged from the battery cell 30 can pass through the through opening 50a into a related venting passage 11a and be finally discharged to the outside of the battery 10.

The support member 50 may be a plate-shaped structural member configured to provide support for the battery cell 30. The support member 50 and structures such as the case 11 of the battery 10 may cooperatively form a gas flow passage, such that during the pressure relief of the battery cell 30, the pressure relief mechanism 40 of the battery cell 30 is opened, and the gas inside the battery cell 30 can enter the gas flow passage through the through opening 50a and be finally discharged to the outside of the battery 10.

If the material of the support member 50 includes a metal material, the material of the support member 50 may include aluminum, steel, or the like, to improve the supporting force of the support member 50.

In the battery 10 according to the embodiments of the present application, the pressure relief mechanism 40 of the battery cell 30 in the battery 10 includes the body part 41 and the insulating part 42, the insulating part 42 is disposed on the side, facing away from the accommodating cavity 30a, of the body part 41, and the melting point T1 of the insulating part 42 is set to be ≥ 400 °C. Thus, when thermal runaway occurs in the battery cell 30, the pressure relief mechanism 40 is opened, the insulating part 42 does not melt and flips together with the body part 41, and the pressure relief mechanism 40 overlaps the support member 50 via the insulating part 42, which helps to reduce the risk of internal short circuits of the battery 10, thereby improving the reliability of the battery 10.

In some embodiments, as shown in FIG. 10, the insulating part 42 is in a sheet shape, and a ratio of the thickness e of the insulating part 42 to a maximum voltage U of the battery 10 is greater than or equal to 0.0005 and less than or equal to 0.02, where e is expressed in millimeters, and U is expressed in volts.

It can be understood that in the case where the maximum voltage of the battery 10 is determined, a greater thickness of the insulating part 42 is more beneficial for increasing the insulation distance between the body part 41 and the support member 50 when thermal runaway occurs in the battery cell 30, so as to meet relevant requirements for the creepage distance inside the battery 10.

Optionally, the ratio of the thickness e of the insulating part 42 to the maximum voltage U of the battery 10 may be 0.0005, 0.00058, 0.0006, 0.0007, 0.0008, or the like.

To this end, the inventors conducted a series of tests to verify the above relationship.

Specifically, a battery cell 30 having a housing 31 with dimensions of 44 mm × 220 mm × 100 mm and an energy density of 180 Wh/Kg was used. The battery cell 30 was connected in series to obtain different voltages and was connected to the support member 50 by adhesion. The dimension of the pressure relief mechanism 40 of the battery cell 30 is a rectangle of 60 mm × 70 mm, and the dimension of the through opening 50a of the support member 50 is a rectangle of 80 mm × 80 mm. Different ratios of e to U were tested by varying the thickness of the insulating part 42. Thermal runaway of the central battery cell 30 was induced using a built-in heating film. After the test, the battery cell was left to stand for 1 h, and a 500 V direct current voltage was applied between the positive electrode of the battery cell 30 and the support member 50 for 60 s to measure the insulation impedance. If the insulation impedance is greater than or equal to 1000 Ω/V, the result is determined as PASS; that is, the insulating part 42 satisfies the insulation requirements. If the impedance is less than 1000 Ω/V, the result is determined as NG; that is, the insulating part 42 fails to provide insulation.

The data of related examples and comparative examples are shown in the following table:

| | e(mm) | U(V) | e/U | Insulation compliance |
|---|---|---|---|---|
| Comparative Example 1 | 0.1 | 340 | 0.00031 | NG |
| Comparative Example 2 | 0.15 | 340 | 0.00044 | NG |
| Example 1 | 0.17 | 340 | 0.00050 | PASS |
| Example 2 | 0.2 | 340 | 0.00058 | PASS |
| Comparative Example 3 | 0.17 | 408 | 0.00042 | NG |
| Example 3 | 0.2 | 408 | 0.00050 | PASS |
| Example 4 | 0.3 | 408 | 0.00074 | PASS |
| Comparative Example 4 | 0.2 | 510 | 0.00039 | NG |
| Example 5 | 0.25 | 510 | 0.00050 | PASS |
| Example 6 | 0.3 | 510 | 0.00059 | PASS |
| Comparative Example 5 | 0.25 | 1020 | 0.00024 | NG |
| Comparative Example 6 | 0.4 | 1020 | 0.00039 | NG |
| Example 7 | 0.51 | 1020 | 0.00050 | PASS |
| Example 8 | 0.6 | 1020 | 0.00059 | PASS |

According to the test results in the above table, it can be seen that by setting the ratio of the thickness e of the insulating part 42 to the maximum voltage U of the battery 10 to be greater than or equal to 0.0005, when thermal runaway occurs in the battery cell 30, it is beneficial for reducing the risk of insulation failure of the insulating part 42 caused by breakdown of the insulating part 42, thereby helping to further improve the insulating properties of the insulating part 42.

It can be understood that a greater ratio of e to U is more beneficial for reducing the risk of insulation failure caused by breakdown of the insulating part 42 when thermal runaway occurs in the battery 10. A smaller value of e is more beneficial for reducing the volume occupied by the insulating part 42, thereby helping to improve the energy density of the battery cell 30.

Therefore, by setting the ratio of the thickness e of the insulating part 42 to the maximum voltage U of the battery 10 to be greater than or equal to 0.0005 and less than or equal to 0.02, when thermal runaway occurs in the battery cell 30, it is beneficial for reducing the risk of insulation failure caused by breakdown of the insulating part 42, thereby helping to improve the insulating properties of the insulating part 42, and is beneficial for reducing the volume inside the battery cell 30 occupied by the insulating part 42, thereby helping to improve the energy density of the battery cell 30.

In some embodiments, the insulating part 42 is in a sheet shape, and a ratio of the thickness e of the insulating part 42 to a product of a creepage distance c of the battery 10 and a breakdown electric field E of the insulating part 42 is greater than or equal to 0.00015, where e and c are expressed in millimeters, and E is expressed in kilovolts/meter.

Typically, c = U/E, where E represents the breakdown electric field of the insulating part 42, which can be measured using instruments such as an electrostatic voltmeter or a sphere gap. However, considering the presence of a large amount of electrolytic solution and high temperature during thermal runaway of the battery cell 30, a safety factor of 0.3 is applied to the creepage distance in practical applications, i.e., 0.3c = U/E. In addition, based on the above, when e is expressed in millimeters, and U is expressed in volts, the ratio of the numerical values of e to U satisfies that e/U is greater than or greater than 0.0005. Thus, it can be seen that when e is expressed in millimeters, c is expressed in millimeters, and E is expressed in kilovolts per meter, the ratio of e to the product of c and E, i.e., e/(c × E), is greater than or equal to 0.00015.

Optionally, the ratio of the thickness e of the insulating part 42 to the product of the creepage distance c of the battery 10 and the breakdown electric field E of the insulating part 42 may be 0.00015, 0.0002, 0.00025, 0.0003, or the like.

Therefore, after systematic analysis and long-term practice, the inventors have found that by setting the ratio of e to the product of the creepage distance c of the battery 10 and the breakdown electric field E of the insulating part 42 to be greater than or equal to 0.00015, when thermal runaway occurs in the battery cell 30, it is beneficial for reducing the risk of insulation failure of the insulating part 42 caused by breakdown of the insulating part 42.

After further research, the inventors have found that by setting the ratio of the thickness e of the insulating part 42 to the product of the creepage distance c of the battery 10 and the breakdown electric field E of the insulating part 42 to be greater than or equal to 0.00015 and less than or equal to 0.006, i.e., 0.00015 ≤ e/(c × E) ≤ 0.006, it is beneficial for reducing the volume inside the battery 10 occupied by the insulating part 42 while reducing the insulation failure of the insulating part 42, thereby improving the energy density of the battery cell 30.

In some embodiments, as shown in FIGs. 7 and 11, the insulating part 42 is provided with a through hole 42a, and the insulating part 42 is disposed around a peripheral side of the through hole 42a. An orthographic projection of the insulating part 42 on the first wall 313 is a first projection 431, the first projection 431 is in an annular shape, the first projection 431 is provided with a first edge 431a and a second edge 431b, the second edge 431b is located inside the first edge 431a, and a ratio of a minimum distance d between the first edge 431a and the second edge 431b to a maximum voltage U of the battery 10 is greater than or equal to 0.0005, where d is expressed in millimeters, and U is expressed in volts.

Optionally, the ratio of the minimum distance d between the first edge 431a and the second edge 431b to the maximum voltage U of the battery 10 may be 0.0005, 0.0006, 0.0007, 0.0008, 0.0009, 0.001, 0.002, or the like.

It can be understood that a greater distance d between the first edge 431a and the second edge 431b is more beneficial for improving the insulating properties of the insulating part 42, while a smaller distance between the first edge 431a and the second edge 431b is more beneficial for reducing the weight of the insulating part 42.

After systematic analysis and a long period of time, the inventors have found that setting the ratio of the minimum distance d between the first edge 431a and the second edge 431b to the maximum voltage U of the battery 10 to be greater than or equal to 0.0005 is beneficial for reducing the weight of the insulating part 42 and reducing the risk of insulation failure caused by breakdown of the insulating part 42 when thermal runaway occurs in the battery cell 30.

In a third aspect, the embodiments of the present application provide an electric device. The electric device includes the battery cell 30 or the battery 10 according to any one of the above embodiments, and the battery 10 is configured to provide electric energy.

The electric device according to the embodiments of the present application uses the battery 10 according to any one of the above embodiments, and therefore has the same technical effects.

In some embodiments, as shown in FIGs. 4 to 11, the battery 10 includes a support member 50 and a battery cell 30. The battery cell 30 includes a housing 31 and a pressure relief mechanism 40. The housing 31 includes an accommodating cavity 30a and a first wall 313. The pressure relief mechanism 40 is disposed on the first wall 313, and the pressure relief mechanism 40 includes a body part 41, an insulating part 42, a reinforcing part 43, and an insulating thermally expandable part 44. The material of the body part 41 includes a metal material. The insulating part 42 is disposed on a side, facing away from the accommodating cavity 30a, of the body part 41, and the melting point T1 of the insulating part 42 satisfies: T1 ≥ 400 °C. The body part 41 is in a sheet shape, and the insulating part 42 is in a sheet shape. The insulating part 42 covers an outer edge of the body part 41, and the material of the insulating part 42 includes one of polyimide, ceramic, and mica. The reinforcing part 43 is disposed between the body part 41 and the insulating part 42. The reinforcing part 43 includes a coating; the coating is formed on a surface of a side, facing the insulating part 42, of the body part 41, and the melting point T2 of the coating satisfies: T2 < 400 °C. The insulating thermally expandable part is disposed as a layer between the insulating part 42 and the body part 41, and the insulating thermally expandable part 44 is configured to be capable of expanding and deforming when heated. The material of the insulating thermally expandable part 44 includes thermally expandable graphite. The support member 50 is disposed on one side of the first wall 313 of the battery cell 30. The material of the support member 50 includes a metal material. The support member 50 is provided with a through opening 50a, and the through opening 50a is disposed opposite to the pressure relief mechanism 40. A ratio of the thickness e of the insulating part 42 to a maximum voltage U of the battery 10 is greater than or equal to 0.0005 and less than or equal to 0.02, where e is expressed in millimeters, and U is expressed in volts. A ratio of the thickness e of the insulating part 42 to a product of a creepage distance c of the battery 10 and a breakdown electric field E of the insulating part 42 is greater than or equal to 0.00015 and less than or equal to 0.006, where c is expressed in millimeters, and E is expressed in kilovolts/meter.

Although the present application has been described with reference to preferred embodiments, various modifications can be made, and components can be replaced with equivalents without departing from the scope of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell , comprising:
a housing , comprising an accommodating cavity and a first wall ; and
a pressure relief mechanism , disposed on the first wall , wherein the pressure relief mechanism comprises a body part and an insulating part ; a material of the body part comprises a metal material, the insulating part is disposed on a side, facing away from the accommodating cavity , of the body part , and a melting point T1 of the insulating part satisfies: T1 ≥ 400 °C.

2. The battery cell according to claim 1, wherein the insulating part covers the body part .

3. The battery cell according to claim 1 or 2, wherein the insulating part is provided with a through hole , and the insulating part is disposed around a peripheral side of the through hole .

4. The battery cell according to claim 3, wherein the insulating part covers an outer edge of the body part .

5. The battery cell according to any one of claims 1 to 4, wherein the body part is in a sheet shape, and/or the insulating part is in a sheet shape.

6. The battery cell according to any one of claims 1 to 5, wherein a material of the insulating part is one of polyimide, ceramic, and mica.

7. The battery cell according to any one of claims 1 to 6, wherein the pressure relief mechanism further comprises a reinforcing part , and the reinforcing part is disposed between the body part and the insulating part .

8. The battery cell according to claim 7, wherein the reinforcing part comprises a coating, the coating is formed on a surface of a side, facing the insulating part , of the body part , and a melting point T2 of the coating satisfies: T2 < 400 °C.

9. The battery cell according to any one of claims 1 to 8, wherein the pressure relief mechanism further comprises an insulating thermally expandable part ; the insulating thermally expandable part is disposed as a layer between the insulating part and the body part , and the insulating thermally expandable part is configured to be capable of expanding and deforming when heated.

10. The battery cell according to claim 9, wherein a material of the insulating thermally expandable part is thermally expandable graphite.

11. A battery , comprising:
the battery cell according to any one of claims 1 to 10; and
a support member , disposed on one side of the first wall of the battery cell , wherein a material of the support member comprises a metal material, the support member is provided with a through opening , and the through opening is disposed opposite to the pressure relief mechanism .

12. The battery according to claim 11, wherein the insulating part is in a sheet shape, and a ratio of a thickness e of the insulating part to a maximum voltage U of the battery is greater than or equal to 0.0005 and less than or equal to 0.02, wherein e is expressed in millimeters, and U is expressed in volts.

13. The battery according to claim 11 or 12, wherein the insulating part is in a sheet shape, and a ratio of a thickness e of the insulating part to a product of a creepage distance c of the battery and a breakdown electric field E of the insulating part is greater than or equal to 0.00015, wherein e and c are expressed in millimeters, and E is expressed in kilovolts/meter.

14. The battery according to any one of claims 11 to 13, wherein the insulating part is provided with a through hole , and the insulating part is disposed around a peripheral side of the through hole ; an orthographic projection of the insulating part on the first wall is a first projection , the first projection is in an annular shape, the first projection is provided with a first edge and a second edge , the second edge is located inside the first edge , and a ratio of a minimum distance d between the first edge and the second edge to a maximum voltage U of the battery is greater than or equal to 0.0005, wherein d is expressed in millimeters, and U is expressed in volts.

15. An electric device, comprising the battery cell according to any one of claims 1 to 10 or the battery according to any one of claims 11 to 14, wherein the battery is configured to provide electric energy.
